# EUROPÄISCHE PATENTSCHRIFT

(11) **EP 1 785 916 B1**
(45) Veröffentlichungstag und Bekanntmachung des Hinweises auf die Patenterteilung: **19.08.2009**
(21) Anmeldenummer: 05292410.7
(22) Anmeldetag: 14.11.2005
(51) Int. Cl.: G06K 19/077, H01L 23/498

(54) **Smartcard-Körper, Smartcard und Herstellungsverfahren**
Smartcard body, smart card and method of manufacturing
Corps de carte à puce, carte à puce et procédé de fabrication

(43) Veröffentlichungstag der Anmeldung: 16.05.2007
(73) Patentinhaber: Tyco Electronics France SAS, 95300 Pontoise (FR); Tyco Electronics AMP GmbH, 64625 Bensheim (DE)
(72) Erfinder: Kalck, Sebastien, 67240 Bischwiller (FR); Morgenthaler, Fréderic, 67470 Seltz (FR)
(74) Vertreter: Grünecker, Kinkeldey, Stockmair & Schwanhäusser Anwaltssozietät

(56) Entgegenhaltungen:
- EP-A- 0 734 063
- FR-A- 2 736 453
- FR-A- 2 795 907

## Beschreibung

Die vorliegende Erfindung bezieht sich auf einen Smart-Card-Körper, eine Smart-Card und ein Herstellungsverfahren derselben, und insbesondere auf Smart-Cards, die für Subscriber Identity Modules SIM Karten angewandt werden.

Gemäß eines herkömmlichen Herstellungsverfahrens einer Smart-Card werden ein Smart-Card-Körper und ein Chip-Karten-Modul separat hergestellt. Das Chip-Karten-Modul wird üblicherweise in den Smart-Card-Körper eingebettet, bevor der mit dem Chip-Karten-Modul versehene Smart-Card-Körper ausgeschnitten wird.

Die US 6,288,904 zeigt ein Chip-Karten-Modul, das in einem Smart-Card-Körper aufgenommen wird. Ein Chip ist auf einem Schaltungsträger angeordnet und mit Kontakten auf der gegenüberliegenden Seite des Schaltungsträgers durch Bonddrähte verbunden. Der Chip ist in einem Rahmen eingeschlossen, der mit einer Füllung vergossen wird, um den Chip und die Bonddrähte vor mechanischer Belastung zu schützen.

Aus der US 5,147,982 ist ein Verkapselungsverfahren eines Halbleiterchips in ein Mikromodul bekannt, wobei das Mikromodul anschließend in einer Karte aufnehmbar ist. Eine vorgestanzte Metallschicht wird gebildet, eine vorgestanzte Kunststoffschicht auf die Metallschicht aufgebracht und ein Halbleiterchip auf der Oberfläche der Metallschicht in einem Durchbruch der Kunststoffschicht angeordnet. Ein Schutzring, der den Chip umschließt, wird mit einem Schutzmaterial, wie beispielsweise einem Silikonharz, gefüllt.

Bei den bekannten Herstellungsverfahren werden die Chip-Karten-Module und Smart-Card-Körper separat hergestellt und das separat hergestellte Chip-Karten-Modul muss in einem Smart-Card-Körper aufgenommen werden, um eine Smart-Card zu bilden, was zu einem komplizierten Herstellungsprozess führt.

Die europäische Patentanmeldung EP 1 554 754 gibt ein Herstellungsverfahren eines Datenträgers, insbesondere eines GSM-Steckerkörpers, an, wobei ein Datenträger auf einem Trägerband hergestellt wird. Der Datenträger weist einen Datenträgerkörper auf, der mit einem elektronischen Bauelement versehen ist, und das Trägerband weist eine Vielzahl von Trägerelementen auf. Das Herstellungsverfahren umfasst das Umspritzen der Trägerelemente des Trägerbands, sodass eine Vielzahl von Datenträgerkörpem gebildet wird, und das Verbinden der elektronischen Bauelemente mit den Datenträgerkörpem, sodass eine Vielzahl von Datenträgern gebildet wird.

Bei diesem Herstellungsverfahren von Datenträgern wird die Vielzahl von Datenträgern mit dem in dem Datenträgerkörper aufgenommenen elektronischen Bauelement hergestellt und die Datenträger auf einem einzigen Trägerband hergestellt, sodass die Herstellungskosten reduziert werden können. Allerdings ist dieses Herstellungsverfahren eines Datenträgers nicht flexibel genug, da der Datenträger mit dem elektronischen Bauelement hergestellt wird.

FR 2 736 453 beschreibt einen Träger für eine Mikroschaltung, umfassend einen Körper 1 und eine Mikroschaltung 2, die mit Kontaktpads 3 elektrisch verbunden ist. Die Mikroschaltung 2 ist in einer Kavität 7 des Körpers 1 aufgenommen und mit den Kontaktpads 3 über Leitungen 13 elektrisch verbunden.

Es wird somit ein flexibles und einfaches Herstellungsverfahren eines Smart-Card-Körpers und ein Montageverfahren für eine Smart-Card benötigt, die mit einem Rolle-zu-Rolle-Verfahren kompatibel sind.

Es liegt daher der Erfindung die Aufgabe zugrunde, ein Verfahren zur Herstellung eines Smart-Card-Körpers und ein Verfahren zur Montage einer Smart-Card so zu verbessern, dass ein einfacher und anpassungsfähiger Prozess bei der Herstellung einer Smart-Card erzielt werden kann.

Diese Aufgabe wird durch ein Verfahren zur Herstellung eines Smart-Card-Körpers gemäß des unabhängigen Anspruchs 1 und durch ein Verfahren zur Montage einer Smart-Card gemäß des unabhängigen Anspruchs 7 gelöst. Darüber hinaus wird diese Aufgabe durch einen Smart-Card-Körper gemäß des unabhängigen Anspruchs 9 und eine Smart-Card gemäß des unabhängigen Anspruchs 15 gelöst.

Vorteilhafte Weiterbildungen der vorliegenden Erfindung sind Gegenstand der abhängigen Ansprüche.

Gemäß der vorliegenden Erfindung wird ein Verfahren zur Herstellung eines Smart-Card-Körpers zur Aufnahme eines Halbleiter-Chips angegeben, wobei das Verfahren das Bilden eines Lead-Frame in einer leitfähigen Schicht umfasst, wobei das Lead-Frame an einer ersten Oberfläche erste Kontakte zur Verbindung mit einer externen Komponente, wie z.B. einem Mobiltelefon oder dergleichen, aufweist und an einer, der ersten Oberfläche gegenüber liegenden zweiten Oberfläche mit dem Halbleiter-Chip verbindbar ist. Das Verfahren umfasst erfindungsgemäß das Bilden einer Gehäuseschicht aus einem isolierenden Material, beispielsweise einem Spritzgussmaterial, auf der zweiten Oberfläche des Lead-Frames, wobei die Gehäuseschicht eine Ausnehmung zur Aufnahme des Halbleiter-Chips aufweist.

Somit wird ein Smart-Card-Körper hergestellt, der angepasst ist, einen Halbleiter-Chip aufzunehmen. Die Aufnahme des Halbleiter-Chips erfolgt erst bei der Montage einer Smart-Card, die einen Smart-Card-Körper und einen darin aufgenommenen Halbleiter-Chip umfasst. Gemäß der vorliegenden Erfindung wird daher ein Verfahren angegeben, wobei ein Smart-Card-Körper, der noch keinen Halbleiter-Chip enthält, hergestellt wird. Dies bietet den Vorteil, dass die Herstellung einer Smart-Card auf besonders flexible Weise erfolgen kann.

Die Möglichkeit, sowohl die Herstellung eines Smart-Card-Körpers als auch die Montage einer Smart-Card mittels eines Rolle-zu-Rolle Verfahrens abzuwickeln, macht die Herstellung einer Smart-Card auch besonders einfach. Eine Rolle von Smart-Card-Körpern kann einfach einem Smart-Card-Hersteller geliefert werden, der anschließend nur den Einbau der Halbleiter-Chips und das Verschließen der mit den Halbleiter-Chips versehenen Smart-Card-Körper als letzte Prozessschritte durchführen muss. Darüber hinaus kann die Personalisierung einer Smart-Card von dem Smart-Card-Hersteller mittels eines Rolle-zu-Rolle-Verfahrens durchgeführt werden, indem ein personalisiertes Band auf die mit den Halbleiter-Chips versehenen Smart-Card-Körper laminiert wird.

Die Herstellung einer Smart-Card wird auch besonders vereinfacht, weil der Smart-Card-Hersteller die in den herkömmlichen Herstellungsverfahren nötigen Schritte des Austrennens des Smart-Card-Moduls und Einbettens des Smart-Card-Moduls in den Smart-Card-Körper nicht mehr durchführen muss. Gemäß der vorliegenden Erfindung wird der Smart-Card-Körper mittels eines Rolle-zu-Rolle-Verfahrens hergestellt, sodass nur der Halbleiterchip eingebaut und der Smart-Card-Körper verschlossen werden müssen, um eine Smart-Card herzustellen. Der Smart-Card-Hersteller kann auch seine bestehenden Rolle-zu-Rolle-Verfahren anwenden.

Darüber hinaus kann der erfindungsgemäße Smart-Card-Körper auch in einem anderen, größeren Smart-Card-Körper aufgenommen werden. Dies ist besonders vorteilhaft, wenn der Smart-Card-Körper gemäß dem 3FF Smart-Card-Format hergestellt wird, das ein Smart-Card-Format mit reduzierten Abmessungen im Vergleich zu den 1 FF und 2FF Smart-Card-Formaten darstellt. So kann ein 3FF Smart-Card-Körper in einen anderen 1 FF, bzw. 2FF Smart-Card-Körper aufgenommen werden, was einem Smart-Card-Hersteller noch mehr Flexibilität bei der Smart-Card- Herstellung bietet.

Besonders vorteilhaft ist es, wenn der Schritt des Bildens eines Lead-Frame das Ausstanzen der leitfähigen Schicht, bestehend vorzugsweise aus Kupfer, und das Metallisieren, vorzugsweise durch Galvanik, der ausgestanzten leitfähigen Schicht umfasst. Eine Kupferrolle kann somit mittels eines Rolle-zu-Rolle-Verfahrens ausgestanzt und metallisiert werden, um auf einfache und kostengünstige Weise ein Lead-Frame zu bilden.

Wenn die zweite Oberfläche der leitfähigen Schicht mit zweiten Kontakten versehen wird, vorzugsweise aus Gold, wobei die zweiten Kontakte zum Kontaktieren des aufzunehmenden Halbleiter-Chips dienen, kann auf einfache Weise der aufzunehmende Halbleiter-Chip elektrisch mit dem Lead-Frame verbunden werden.

Wenn die Gehäuseschicht aus einem isolierenden Spritzgussmaterial gebildet wird, wobei eine vorgestanzte dielektrische Schicht auf die zweite Oberfläche der leitfähigen Schicht laminiert wird, und die laminierte leitfähige Schicht mit einem Kunststoff umspritzt wird, kann die Gehäuseschicht auf einfache und kostengünstige Weise hergestellt werden. Darüber hinaus bietet dies den Vorteil, dass nur eine Deckschicht in einem späteren Prozessschritt auf die Gehäuseschicht angeordnet werden muss, um, nachdem ein Halbleiter-Chip in die Ausnehmung der Gehäuseschicht aufgenommen wurde, eine Smart-Card zu bilden. Somit wird das Verfahren zur Montage einer Smart-Card vereinfacht.

Besonders vorteilhaft ist es, eine Vielzahl von Smart-Card-Körpern auf einem Trägerband herzustellen, wobei die Vielzahl von Smart-Card-Körpern von dem Trägerband trennbar sind. Somit ist das Verfahren zur Herstellung eines Smart-Card-Körpers mit einem Rolle-zu-Rolle-Verfahren kompatibel, was einen einfachen und kostengünstigen Herstellungsprozess ermöglicht. Die Vielzahl von Smart-Card-Körpern werden auf einer Rolle hergestellt und können einem Smart-Card-Hersteller geliefert werden, der anschließend nur einen Halbleiter-Chip in dem Smart-Card-Körper montieren und den Smart-Card-Körper verschließen muss, um eine Smart-Card herzustellen.

Gemäß der vorliegenden Erfindung wird ein Verfahren zur Montage einer Smart-Card angegeben, wobei das Verfahren das Montieren eines Halbleiter-Chips in der Ausnehmung der Gehäuseschicht des hergestellten Smart-Card-Körpers und das Verschließen der Ausnehmung der Gehäuseschicht des Smart-Card-Körpers umfasst.

Somit wird eine Smart-Card auf einfache und kostengünstige Weise hergestellt. Darüber hinaus bietet das Verfahren zur Montage einer Smart-Card einem Smart-Card-Hersteller den Vorteil, dass die Herstellung einer Smart-Card schneller durchgeführt werden kann, vor allem wenn die Smart-Cards mittels eines Rolle-zu-Rolle-Verfahrens hergestellt werden. Da die Smart-Card-Körper auf einer Rolle fertig geliefert werden, muss nur der Halbleiter-Chip in dem Smart-Card-Körper montiert werden und der Smart-Card-Körper verschlossen werden, um die Smart-Card zu fertigen. Die Deckschicht des Smart-Card-Körpers kann auch personalisiert werden, beispielsweise mit einer Beschriftung versehen werden.

Besonders vorteilhaft ist es, wenn das Verschließen der Ausnehmung der Gehäuseschicht des Smart-Card-Körpers das Laminieren eines Bands auf die Ausnehmung umfasst. Somit kann auf einfache, schnelle und kostengünstige Weise der Smart-Card-Körper verschlossen werden.

Anhand der in den beiliegenden Zeichnungen dargestellten Ausgestaltungen wird die Erfindung im Folgenden näher erläutert. Ähnliche oder korrespondierende Einzelheiten des erfindungsgemäßen Smart-Card-Körpers sind in den Figuren mit denselben Bezugszeichen versehen. Es zeigen:
- **Figur 1**: eine Draufsicht auf eine erste Seite eines Trägerbands, das sich in einem ersten Schritt des Herstellungsverfahrens eines Smart-Card-Körpers gemäß der vorliegenden Erfindung befindet;
- **Figur 2**: eine Draufsicht auf eine erste Seite eines Trägerbands, das sich in einem zweiten Schritt des Herstellungsverfahrens eines Smart-Card-Körpers gemäß der vorliegenden Erfindung befindet;
- **Figur 3**: eine Draufsicht auf eine erste Seite eines Trägerbands, das sich in einem dritten Schritt des Herstellungsverfahrens eines Smart-Card-Körpers gemäß der vorliegenden Erfindung befindet;
- **Figur 4**: eine Draufsicht auf eine zweite Seite des in der Figur 3 gezeigten Trägerbands;
- **Figur 5**: einen Schnitt durch das in der Figur 4 gezeigte Trägerband entlang der Schnittlinie A-A;
- **Figur 6**: eine vergrößerte Ansicht des in der Figur 5 gezeigten Schnitts.

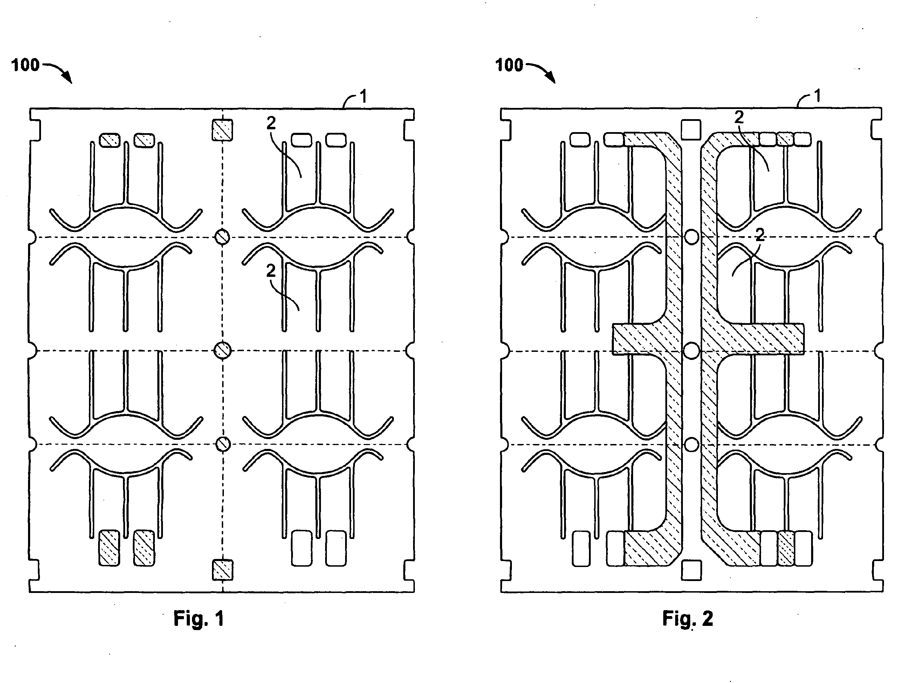

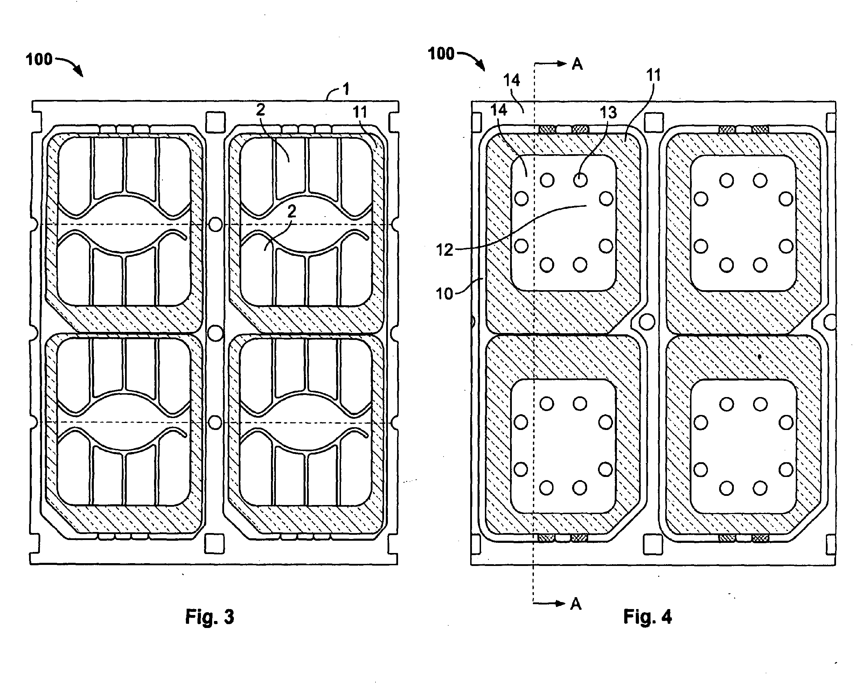

Die Figuren 1, 2 und 3 zeigen eine Draufsicht auf eine erste Oberfläche eines Trägerbands. Die Figur 4 zeigt eine Draufsicht auf eine zweite Oberfläche, die der ersten Oberfläche gegenüber liegt. Somit zeigen die Figuren 1, 2 und 3 und die Figur 4 Draufsichten auf die zwei Seiten des erfindungsgemäßen Smart-Card-Körpers.

Wie aus der Figur 1 ersichtlich, wird eine Vielzahl von Smart-Card-Körpern 10 auf einem Trägerband 100 hergestellt. Das Trägerband 100 wird durch eine leitfähige Schicht 1 gebildet, die vorzugsweise aus einem Kupferblech besteht. Andere leitfähige Materialien sind aber auch möglich, wie beispielsweise Aluminium. Das Trägerband 100 besteht vorzugsweise aus einer Rolle der leitfähigen Schicht 1, sodass die Vielzahl von Smart-Card-Körpern 10 mittels eines Rolle-zu-Rolle-Verfahrens hergestellt werden können.

Das Verfahren zur Herstellung eines Smart-Card-Körpers 10 zur Aufnahme eines Halbleiter-Chips wird mit Hilfe der Figuren 1, 2 und 3 erläutert.

Zunächst wird die leitfähige Schicht 1 ausgestanzt, und ein Lead-Frame in der leitfähigen Schicht 1 gebildet. An einer ersten Oberfläche der leitfähigen Schicht 1, die in Figur 1 gezeigt ist, weist das Lead-Frame erste Kontakte 2 auf, und die leitfähige Schicht 1 wird von einem Stanzwerkzeug (in Figur 1 durch die schwarzen Ausstanzungen dargestellt) der Rolle entlang ausgestanzt. Wie aus den Figuren 1, 2 und 3 ersichtlich, werden zwei Smart-Card-Körper 10 innerhalb einer Breite der leitfähigen Rolle hergestellt. Selbstverständlich ist es auch möglich, eine andere Anzahl von Smart-Card-Körpern innerhalb der Breite der Rolle auszuwählen.

Nachdem die leitfähige Schicht 1 ausgestanzt und das Lead-Frame gebildet wurde, werden die an der ersten Oberfläche angeordneten Kontakte 2 metallisiert. Vorzugsweise werden die ersten Kontakte 2 mit Nickel und Nickelphosphor durch ein Galvanikverfahren beschichtet. Andere Metallisierungsverfahren der ausgestanzten leitfähigen Schicht 1 sind aber auch möglich, wie beispielsweise Sputtering, Aufdampfen oder dergleichen. Die zweite Oberfläche der leitfähigen Schicht 1 (in Figuren 1, 2 und 3 nicht dargestellt) wird mit zweiten Kontakten versehen, die vorzugsweise aus Gold bestehen. Diese zweiten Kontakte dienen dazu, den aufzunehmenden Halbleiter-Chip mit den ersten Kontakten 2 des Lead-Frame zu verbinden. Vorzugsweise wird der Halbleiter-Chip durch Bonddrähte mit den zweiten Kontakten verbunden.

Anschließend wird eine vorgestanzte dielektrische Schicht (in Figuren 1, 2 und 3 nicht dargestellt) auf die zweite Oberfläche der leitfähigen Schicht 1 laminiert. Die dielektrische Schicht ist so vorgestanzt, dass die zweiten Kontakte den Ausstanzungen der dielektrischen Schicht entsprechen.

Die dielektrische Schicht wird dann mittels einer Laserbehandlung aktiviert, wobei diese Laserbehandlung die Rauhigkeit der Oberfläche der dielektrischen Schicht erhöht. Dieser Prozessschritt ist notwendig, damit der in einem nachfolgenden Verfahrensschritt umspritzte Kunststoff an der Oberfläche der dielektrischen Schicht festhält.

Wie aus der Figur 2 ersichtlich, stanzen Schnittwerkzeuge das Trägerband 100 aus (durch die schwarzen Ausstanzungen dargestellt) und die Form des Smart-Card-Körpers wird somit gebildet.

Gemäß einer vorteilhaften Ausführungsform der vorliegenden Erfindung werden zwei Smart-Card-Körper innerhalb einer Breite der Rolle hergestellt und ein Stanzwerkzeug stanzt die jeweilige erste Hälfte von zwei ersten Smart-Card-Körpern aus, während ein zweites Stanzwerkzeug die jeweilige zweite Hälfte von zwei zweiten Smart-Card-Körpern ausstanzt, wie aus der Figur 2 ersichtlich. Durch Bewegung entlang der Rolle können somit die beiden Hälften von zwei Smart-Card-Körpern innerhalb einer Breite der Rolle ausgestanzt und die Form des Smart-Card-Körpers gebildet werden.

Wie aus der Figur 3 ersichtlich, wird dann eine Gehäuseschicht 11 aus einem isolierenden Spritzgussmaterial auf der zweiten Oberfläche des Lead-Frames gebildet. Dabei wird die laminierte leitfähige Schicht 1 mit einem Kunststoff umspritzt. Die umspritzte Gehäuseschicht 11 bildet sowohl um die ersten wie auch die zweiten Kontakte 2, 13 jeweils einen umlaufenden Rand des Smart-Card-Körpers und der so gebildete Smart-Card-Körper entspricht vorzugsweise dem Format einer 3FF Smart-Card.

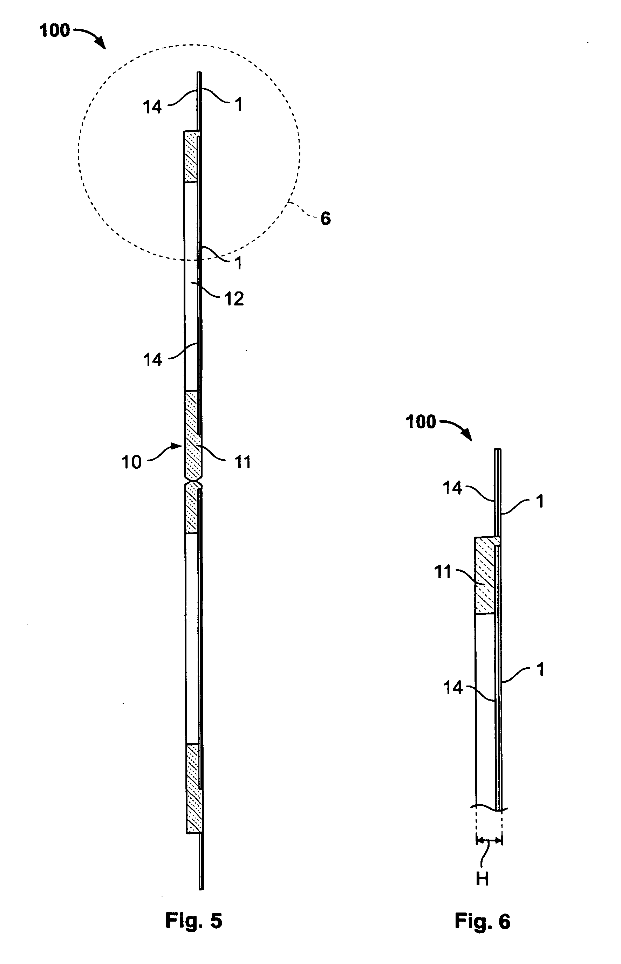

Die Figur 4 zeigt eine Draufsicht auf die zweite Oberfläche des Smart-Card-Körpers 10 und Figur 5 zeigt einen Schnitt durch das Trägerband 100 entlang der in der Figur 4 gezeigten Schnittlinie A-A. Figur 6 zeigt eine vergrößerte Ansicht des Details VI des in der Figur 5 gezeigten Schnitts.

Wie aus der Figur 4 ersichtlich, weist die Gehäuseschicht 11 eine Ausnehmung 12 zur Aufnahme eines Halbleiter-Chips auf. Die zweiten Kontakte 13 sind auf der leitfähigen Schicht 1 angeordnet und die auf der leitfähigen Schicht 1 laminierte dielektrische Schicht 14 ist so vorgestanzt, dass die zweiten Kontakte 13 zugänglich zum Bonden mit einem aufzunehmenden Halbleiter-Chip sind.

Wie aus den Figuren 5 und 6 ersichtlich, entspricht die kombinierte Höhe der Gehäuseschicht 11 und der Deckschicht (in den Figuren nicht dargestellt), die in einem nachfolgenden Prozessschritt der Montage einer Smart-Card auf die Gehäuseschicht 11 laminiert wird, der Dicke einer Smart-Card gemäß des 3FF-Formats. Vorzugsweise beträgt die Höhe der Gehäuseschicht 11 einen Wert H von 0.7 Millimeter, während die Dicke der laminierten Deckschicht einen Wert von 0.1 Millimeter beträgt. Wie aus der Figur 6 ersichtlich, umfasst die Höhe H der Gehäuseschicht 11 die Distanz zwischen der in der Ebene der ersten Oberfläche der leitfähigen Schicht 1 angeordneten ersten Oberfläche des Spritzgussmaterials und der zweiten Oberfläche des Spritzgussmaterials, auf welche die Deckschicht laminiert wird.

Im Folgenden wird die Montage einer Smart-Card näher erläutert.

Ein Halbleiter-Chip wird in der Ausnehmung 12 der Gehäuseschicht 11 des Smart-Card-Körpers 10 montiert. Der Halbleiter-Chip wird vorzugsweise auf die dielektrische Schicht 14 geklebt. Alternativ kann auch der Halbleiter-Chip direkt auf die leitfähige Schicht 1 angebracht werden. Anschließend wird die mit dem Halbleiter-Chip versehene Ausnehmung 12 der Gehäuseschicht 11 des Smart-Card-Körpers 10 verschlossen. Vorzugsweise wird ein Band auf die Ausnehmung 12 der Gehäuseschicht 11 laminiert.

Gemäß einer vorteilhaften Ausführungsform der vorliegenden Erfindung werden eine Vielzahl von Smart-Card-Körpern 10 auf einem Trägerband 100 mittels eines Rolle-zu-Rolle-Verfahrens hergestellt. Dies vereinfacht den Herstellungsprozess einer Smart-Card, da ein Trägerband einem Smart-Card-Hersteller geliefert werden kann, der dann nur die Prozessschritte des Einbaus eines Halbleiterchips und des Verschließens der Gehäuseschicht durchführen muss. Da die Vielzahl von Smart-Card-Körpern 10 von dem Trägerband 100 trennbar sind, müssen die Smart-Cards nach der Montage nur vereinzelt werden.

Das Verfahren zur Herstellung eines Smart-Card-Körpers gemäß der vorliegenden Erfindung ermöglicht es, die Herstellung von Subscriber Identity Module SIM-Karten flexibler und einfacher zu gestalten. Es können Smart-Card-Körper auf einem Trägerband mittels eines Rolle-zu-Rolle-Verfahrens hergestellt werden und ein solches Trägerband kann dann einem Smart-Card-Hersteller geliefert werden, der anschließend nur den Einbau eines Halbleiter-Chips und das Verschließen des Smart-Card-Körpers durchführen muss, um eine Smart-Card zu fertigen.

## Patentansprüche

1. Verfahren zur Herstellung eines Smart-Card-Körpers (10) zur Aufnahme eines Halbleiter-Chips, wobei das Verfahren die folgenden Schritte umfasst:
Bilden eines Lead-Frame in einer leitfähigen Schicht (1), wobei das Lead-Frame an einer ersten Oberfläche erste Kontakte (2) aufweist, und
Bilden einer elektrisch isolierenden Gehäuseschicht (11), wobei die Gehäuseschicht (11) eine Ausnehmung (12) zur Aufnahme des Halbleiter-Chips aufweist,
**dadurch gekennzeichnet, dass**
das Lead-Frame an einer, der ersten Oberfläche gegenüberliegenden zweiten Oberfläche mit dem Halbleiter-Chip verbindbar ist,
die elektrisch isolierende Gehäuseschicht (11) auf der zweiten Oberfläche des Lead-Frame gebildet ist,
und die Ausnehmung (12) von der dem Lead-Frame gegenüberliegenden Oberfläche der elektrisch isolierenden Gehäuseschicht (11) zugänglich ist.

2. Verfahren nach Anspruch 1, wobei der Schritt des Bildens eines Lead-Frame das Ausstanzen der leitfähigen Schicht (1), bestehend vorzugsweise aus Kupfer, und das Metallisieren, vorzugsweise durch Galvanik, der ausgestanzten leitfähigen Schicht (1) umfasst.

3. Verfahren nach einem der Ansprüche 1 oder 2, weiterhin umfassend das Versehen der zweiten Oberfläche der leitfähigen Schicht (1) mit zweiten Kontakten (13), vorzugsweise aus Gold, wobei die zweiten Kontakte (13) zum Kontaktieren des aufzunehmenden Halbleiter-Chips dienen.

4. Verfahren nach einem der Ansprüche 1 bis 3, weiterhin umfassend das Laminieren einer vorgestanzten dielektrischen Schicht (14) auf die zweite Oberfläche der leitfähigen Schicht (1).

5. Verfahren nach Anspruch 4, wobei der Schritt des Bildens der Gehäuseschicht (11) das Umspritzen der laminierten leitfähigen Schicht (1) mit einem Kunststoff umfasst.

6. Verfahren nach einem der Ansprüche 1 bis 5, wobei eine Vielzahl von Smart-Card-Körpem (10) auf einem Trägerband (100) hergestellt werden und von dem Trägerband (100) trennbar sind.

7. Verfahren zur Montage einer Smart-Card, wobei das Verfahren die folgenden Schritte umfasst:
Montieren eines Halbleiter-Chips in der Ausnehmung (12) der Gehäuseschicht (11) des nach einem der Ansprüche 1 bis 6 hergestellten Smart-Card-Körpers (10), und
Verschließen der Ausnehmung (12) der Gehäuseschicht (11) des Smart-Card-Körpers (10).

8. Verfahren nach Anspruch 7, wobei der Schritt des Verschließens das Laminieren eines Bands auf die Ausnehmung (12) der Gehäuseschicht (11) des Smart-Card-Körpers (10) umfasst.

9. Smart-Card-Körper zur Aufnahme eines Halbleiter-Chips, wobei der Smart-Card-Körper (10) umfasst:
eine leitfähige Schicht (1), die so strukturiert ist, dass sie ein Lead-Frame bildet, das an einer ersten Oberfläche erste Kontakte (2) aufweist,
wobei das Lead-Frame eine elektrisch isolierende Gehäuseschicht (11) mit einer Ausnehmung (12) aufweist, die so ausgestaltet ist, dass sie den Halbleiter-Chip aufnimmt,
**dadurch gekennzeichnet, dass**
das Lead-Frame an einer, der ersten Oberfläche gegenüberliegenden zweiten Oberfläche mit dem Halbleiter-Chip verbindbar ist,
die elektrisch isolierende Gehäuseschicht (11) auf der zweiten Oberfläche des Lead-Frame gebildet ist,
und die Ausnehmung. (12) von der dem Lead-Frame gegenüberliegenden Oberfläche der elektrisch isolierenden Gehäuseschicht (11) zugänglich ist.

10. Smart-Card-Körper nach Anspruch 9, wobei die leitfähige Schicht (1), vorzugsweise aus Kupfer, ausgestanzt ist.

11. Smart-Card-Körper nach einem der Ansprüche 9 oder 10, wobei die zweite Oberfläche der leitfähigen Schicht (1) mit zweiten Kontakten (13), vorzugsweise aus Gold, versehen ist, wobei die zweiten Kontakte (13) zum Kontaktieren des aufzunehmenden Halbleiter-Chips dienen.

12. Smart-Card-Körper nach einem der Ansprüche 9 bis 11, wobei die zweite Oberfläche der leitfähigen Schicht (1) mit einer vorgestanzten dielektrischen Schicht (14) versehen ist.

13. Smart-Card-Körper nach Anspruch 12, wobei die Gehäuseschicht (11) aus einem vorzugsweise spritzgegossenen Kunststoff besteht.

14. Trägerband umfassend eine Vielzahl von Smart-Card-Körpem (10) nach einem der Ansprüche 10 bis 13, wobei die Vielzahl von Smart-Card-Körpem (10) von dem Trägerband (100) trennbar sind.

15. Smart-Card umfassend einen Halbleiter-Chip, der in der Ausnehmung (12) der Gehäuseschicht (11) des Smart-Card-Körpers (10) nach einem der Ansprüche 9 bis 13 angebracht ist, und eine Deckschicht zum Verschließen der Ausnehmung (12) der Gehäuseschicht (11) des Smart-Card-Körpers (10).

16. Smart-Card nach Anspruch 15, wobei die Deckschicht ein Laminat umfasst.

17. Smart-Card nach einem der Ansprüche 15 oder 16, wobei die Smart-Card eine Subscriber Identity Module SIM Karte umfasst.

## Claims

1. A method of producing a smart card body (10) for accommodating a semiconductor chip, the method comprising the following steps:
forming a lead frame in a conductive layer (1), the lead frame comprising first contacts (2) on a first surface, and
forming an electrically insulating housing layer (11), the housing layer (11) comprising a recess (12) for accommodating the semiconductor chip,
**characterised in that**
the lead frame is connectable to the semiconductor chip on a second surface located opposite the first surface,
the electrically insulating housing layer (11) is formed on the second surface of the lead frame, and
the recess (12) is accessible from the surface of the electrically insulating housing layer (11) opposite the lead frame.

2. A method according to claim 1, wherein the step of forming a lead frame comprises stamping out the conductive layer (1), consisting preferably of copper, and metallising, preferably by electroplating, the stamped-out conductive layer (1).

3. A method according to claim 1 or 2, further comprising providing the second surface of the conductive layer (1) with second contacts (13), preferably of gold, the second contacts (13) serving to contact the semiconductor chip to be accommodated.

4. A method according to any one of claims 1 to 3, further comprising laminating a prestamped dielectric layer (14) onto the second surface of the conductive layer (1).

5. A method according to claim 4, wherein the step of forming the housing layer (11) comprises injection moulding a plastics material around the laminated conductive layer (1).

6. A method according to any one of claims 1 to 5, wherein a plurality of smart card bodies (10) are produced on a carrier strip (100) and are separable from the carrier strip (100).

7. A method of assembling a smart card, wherein the method comprises the following steps:
fitting a semiconductor chip in the recess (12) in the housing layer (11) of the smart card body (10) produced according to any one of claims 1 to 6, and
sealing the recess (12) in the housing layer (11) of the smart card body (10).

8. A method according to claim 7, wherein the sealing step comprises laminating a tape onto the recess (12) in the housing layer (11) of the smart card body (10).

9. A smart card body for accommodating a semiconductor chip, the smart card body (10) comprising:
a conductive layer (1), which is structured in such a way that it forms a lead frame, which comprises first contacts (2) on a first surface,
the lead frame comprising an electrically insulating housing layer (11) with a recess (12), which is designed so as to accommodate the semiconductor chip,
**characterised in that**
the lead frame is connectable to the semiconductor chip on a second surface located opposite the first surface,
the electrically insulating housing layer (11) is formed on the second surface of the lead frame, and
the recess (12) is accessible from the surface of the electrically insulating housing layer (11) opposite the lead frame.

10. A smart card body according to claim 9, wherein the conductive laser (1), preferably of copper, is stamped out.

11. A smart card body according to claim 9 or 10, wherein the second surface of the conductive layer (1) is provided with second contacts (13), preferably of gold, the second contacts (13) serving to contact the semiconductor chip to be accommodated.

12. A smart card body according to any one of claims 9 to 11, wherein the second surface of the conductive layer (1) is provided with a prestamped dielectric layer (14).

13. A smart card body according to claim 12, wherein the housing layer (11) consists of a preferably injection-moulded plastics material.

14. A carrier strip comprising a plurality of smart card bodies (10) according to any one of claims 10 to 13, wherein the plurality of smart card bodies (10) are separable from the carrier strip (100).

15. A smart card comprising a semiconductor chip, which is fitted in the recess (12) in the housing layer (11) of the smart card body (10) according to any one of claims 9 to 13, and a cover layer for sealing the recess (12) in the housing layer (11) of the smart card body (10).

16. A smart card according to claim 15, wherein the cover layer comprises a laminate.

17. A smart card according to claim 15 or 16, wherein the smart card comprises a Subscriber Identity Module (SIM) card.

## Revendications

1. Procédé de fabrication d'un corps de carte à puce (10) destiné à recevoir une puce semi-conductrice, le procédé comprenant les étapes suivantes:
formation d'une grille de connexion dans une couche conductrice (1), la grille de connexion étant pourvue de premiers contacts (2) sur une première surface, et
formation d'une couche de boîtier (11) électriquement isolante, la couche de boîtier (11) étant pourvue d'un évidement (12) pour la réception de la puce semi-conductrice,
**caractérisé par le fait que**
la grille de connexion est connectable à la puce semi-conductrice sur une seconde surface opposée à la première surface,
la couche de boîtier (11) électriquement isolante est formée sur la seconde surface de la grille de connexion, et
l'évidement (12) est accessible par la surface de la couche de boîtier (11) électriquement isolante opposée à la grille de connexion.

2. Procédé selon la revendication 1, l'étape de formation d'une grille de connexion comprenant le découpage de la couche conductrice (1), formée de cuivre de préférence, et la métallisation, de préférence par galvanisation, de la couche conductrice (1) découpée.

3. Procédé selon l'une des revendications 1 ou 2, comprenant, en outre, la garniture de la seconde surface de la couche conductrice (1) avec des seconds contacts (13), de préférence en or, les seconds contacts (13) servant à établir le contact avec la puce semi-conductrice à recevoir.

4. Procédé selon l'une des revendications 1 à 3, comprenant, en outre, le laminage d'une couche diélectrique prédécoupée (14) sur la seconde surface de la couche conductrice (1).

5. Procédé selon la revendication 4, l'étape de formation de la couche de boîtier (11) comprenant le moulage par injection d'une matière plastique autour de la couche conductrice (1) laminée.

6. Procédé selon l'une des revendications 1 à 5, une pluralité de corps de carte à puce (10) étant fabriqués sur une bande de support (100) et pouvant être séparés de la bande de support (100).

7. Procédé de montage d'une carte à puce, le procédé comprenant les étapes suivantes:
montage d'une puce semi-conductrice dans l'évidement (12) de la couche de boîtier (11) du corps de carte à puce (10) fabriqué selon l'une des revendications 1 à 6 et
fermeture de l'évidement (12) de la couche de boîtier (11) du corps de carte à puce (10).

8. Procédé selon la revendication 7, l'étape de fermeture comprenant le laminage d'une bande sur l'évidement (12) de la couche de boîtier (11) du corps de carte à puce (10).

9. Corps de carte à puce destiné à recevoir une puce semi-conductrice, le corps de carte à puce (10) comprenant:
une couche conductrice (1) qui est structurée de manière à former une grille de connexion qui comprend des premiers contacts (2) sur une première surface,
la grille de connexion étant pourvue d'une couche de boîtier (11) électriquement isolante comportant un évidement (12) qui est formé de manière à recevoir la puce semi-conductrice,
**caractérisé par le fait que**
la grille de connexion est connectable à la puce semi-conductrice sur une seconde surface opposée à la première surface,
la couche de boîtier (11) électriquement isolante est formée sur la seconde surface de la grille de connexion, et
l'évidement (12) est accessible par la surface de la couche de boîtier (11) électriquement isolante opposée à la grille de connexion.

10. Corps de carte à puce selon la revendication 9, la couche conductrice (1), de préférence en cuivre, étant découpée.

11. Corps de carte à puce selon l'une des revendications 9 ou 10, la seconde surface de la couche conductrice (1) étant pourvue de seconds contacts (13), de préférence en or, les seconds contacts (13) servant à établir le contact avec la puce semi-conductrice à recevoir.

12. Corps de carte à puce selon l'une des revendications 9 à 11, la seconde surface de la couche conductrice (1) étant pourvue d'une couche diélectrique prédécoupée (14).

13. Corps de carte à puce selon la revendication 12, la couche de boîtier (11) étant formée d'une matière plastique de préférence moulée par injection.

14. Bande de support comprenant une pluralité de corps de carte à puce (10) selon l'une des revendications 10 à 13, la pluralité des corps de carte à puce (10) pouvant être séparés de la bande de support (100).

15. Carte à puce comprenant une puce semi-conductrice qui est montée dans l'évidement (12) de la couche de boîtier (11) du corps de carte à puce (10) selon l'une des revendications 9 à 13 et une couche de couverture pour fermer l'évidement (12) de la couche de boîtier (11) du corps de carte à puce (10).

16. Carte à puce selon la revendication 15, la couche de couverture comprenant un stratifié.

17. Carte à puce selon l'une des revendications 15 ou 16, la carte à puce comprenant une carte à module d'identification d'abonné (carte SIM).
